# EUROPEAN PATENT APPLICATION

(11) **EP 2 682 176 A1**
(43) Date of publication of application: **08.01.2014**
(21) Application number: 12751852.0
(22) Date of filing: 06.02.2012
(51) Int. Cl.: B01D 63/00, B01D 63/12

(54) **SEPARATION MEMBRANE MODULE**

(30) Priority: 28.02.2011 JP 2011041418
(71) Applicant: Nitto Denko Corporation, Ibaraki-shi, Osaka 567-8680 (JP)
(72) Inventor: KONISHI, Takahisa, Ibaraki-shi, Osaka 567-8680 (JP); KOBAYASHI, Kentarou, Ibaraki-shi, Osaka 567-8680 (JP); KOBUKE, Makoto, Ibaraki-shi, Osaka 567-8680 (JP)
(74) Representative: Intès, Didier Gérard André
(86) International application number: PCT/JP2012/000764
(87) International publication number: WO 2012/117668

(57) **Abstract**

Provided is a separation membrane module including: a tubular pressure container 7 in which a raw liquid is filtered through a separation membrane to produce a permeate liquid; and an internal member 5A provided in the pressure container 7. The internal member 5A is equipped with a sensor for detecting characteristics of at least one of the raw liquid and the permeate liquid. A detected signal generated by the sensor is transmitted from an antenna 65. The internal member 5A has an antenna holding portion 54 in which the antenna 65 is embedded. A gap between the antenna holding portion 54 and an inner peripheral surface 7a of the pressure container 7 is sealed with a sealing member 42.

## Description

### TECHNICAL FIELD

The present invention relates to a separation membrane module internally including a separation membrane for filtering a raw liquid.

### BACKGROUND ART

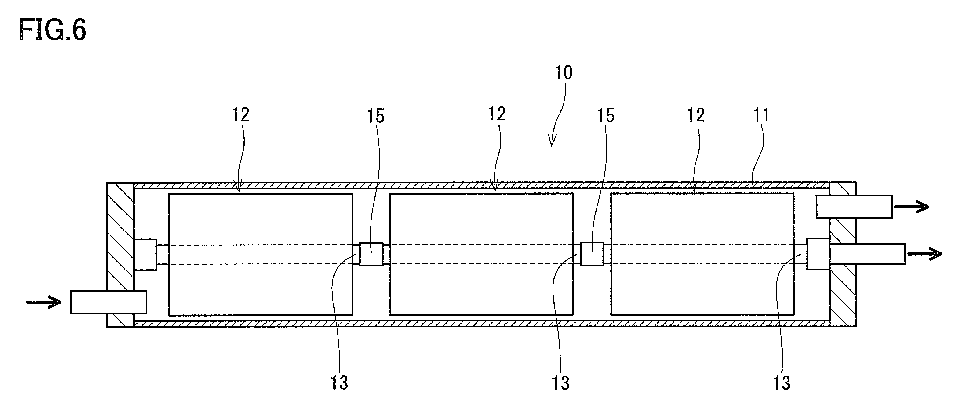

Separation membrane modules are used for, for example, seawater desalination and ultrapure water production. For example, Patent Literature 1 discloses a separation membrane module 10 as shown in FIG. 6. In the separation membrane module 10, a plurality of spiral separation membrane elements 12 are loaded in a tubular pressure container 11 so as to be arranged in a line. As indicated by arrows in FIG. 6, when a raw liquid is fed into the pressure container 11 from one end of the separation membrane module 10, the raw liquid is filtered through the separation membranes of the spiral separation membrane elements 12 to produce a permeate liquid, and the permeate liquid and the concentrated raw liquid are separately discharged from the other end of the separation membrane module 10.

The spiral separation membrane elements 12 adjacent to each other are coupled by coupling members 15. Each spiral separation membrane element 12 has a structure in which a layered body including separation membranes and carrier materials is wound around a central tube 13. Each coupling member 15 is generally a short tube both end portions of which are respectively fitted to the central tubes 13 of the spiral separation membrane elements 12. In the example shown in FIG. 6, the coupling members 15 are fitted on the outer sides of the central tubes 13.

Furthermore, Patent Literature 1 describes providing the coupling member 15 with various sensors for detecting the characteristics of the raw liquid and the permeate liquid, and with an antenna for transmitting detected signals generated by the sensors. Since the separation membrane module 10 disclosed in Patent Literature 1 has such a configuration, the sensors and the like can be reused even when the spiral separation membrane elements 12 are replaced by new ones.

### CITATION LIST

### Patent Literature

Patent Literature 1: JP 2009-166034 A

### SUMMARY OF INVENTION

### Technical Problem

In the pressure container, spaces are formed around the spiral separation membrane elements. In the example shown in FIG. 6, spaces are formed also around the coupling members 15. Therefore, when the inside of the pressure container is filled with a raw liquid during operation, wireless communication using the antenna may be hindered. Particularly, in the case where the raw liquid is, for example, a highly electrically-conductive liquid such as sea water, a radio wave transmitted from the antenna is attenuated by a layer of the raw liquid lying between the antenna and the inner peripheral surface of the pressure container. As a result, the received signal strength indicator (RSSI) at a receiver or a repeater placed outside the pressure container is reduced.

In view of such circumstances, the present invention aims to provide a separation membrane module that includes an antenna disposed in a pressure container and that can prevent reduction in received signal strength indication when a radio wave is transmitted from the antenna.

### Solution to Problem

In order to solve the above problem, the present invention provides a separation membrane module including: a tubular pressure container in which a raw liquid is filtered through a separation membrane to produce a permeate liquid; a sensor for detecting characteristics of at least one of the raw liquid and the permeate liquid; an antenna for transmitting a detected signal generated by the sensor; an internal member provided in the tubular pressure container so as to be adjacent to the separation membrane in an axial direction of the pressure container. The internal member is equipped with the sensor, and has an antenna holding portion in which the antenna is embedded. The module further includes a sealing member sealing a gap between the antenna holding portion and an inner peripheral surface of the pressure container.

### Advantageous Effects of Invention

In the above configuration, the antenna is embedded in the antenna holding portion, and the gap between the antenna holding portion and the inner peripheral surface of the pressure container is sealed with the sealing member. Therefore, a radio wave is transmitted from the antenna to the outside of the pressure container without passing through the raw liquid. Consequently, the reduction in received signal strength indication can be prevented.

### BRIEF DESCRIPTION OF DRAWINGS

FIG. 1 is a cross-sectional view of a separation membrane module according to a first embodiment of the present invention.
FIG. 2 is a schematic configuration diagram of a spiral separation membrane element.
FIG. 3A is an elevation view of an internal member of the first embodiment, and FIG. 3B is a cross-sectional view taken along a IIIB-IIIB line of FIG. 3A.
FIGS. 4A and 4B are cross-sectional views showing alternative methods for fixing a sealing member to a projecting end surface of a plate portion.
FIG. 5 is an elevation view of an internal member of a second embodiment of the present invention.
FIG. 6 is a cross-sectional view of a conventional separation membrane module.

### DESCRIPTION OF EMBODIMENTS

Hereinafter, embodiments of the present invention will be described with reference to the drawings. The following description relates to examples of the present invention, and the present invention is not limited by the examples.

### (First embodiment)

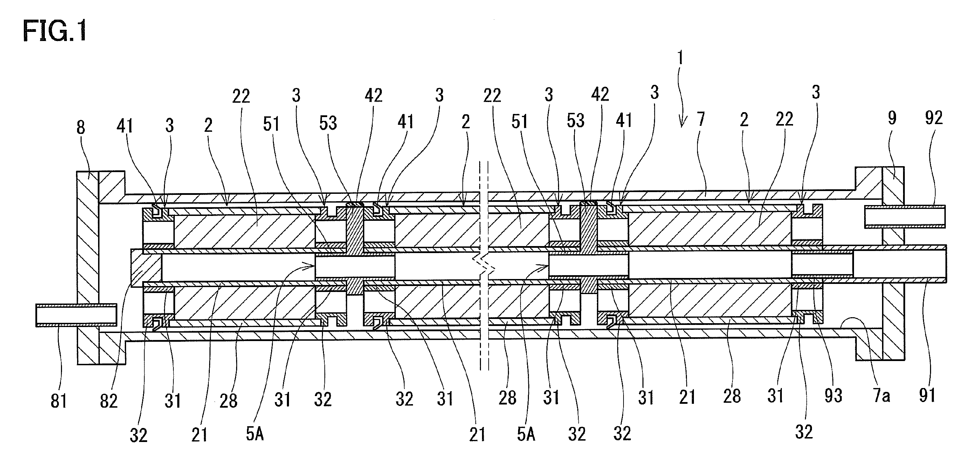

A separation membrane module 1 according to a first embodiment of the present invention is shown in FIG. 1. The separation membrane module 1 includes: a tubular pressure container 7 called a vessel; a plurality of spiral separation membrane elements 2 (hereinafter, simply referred to as "separation membrane elements 2") loaded in the pressure container 7 so as to be arranged in a line in the axial direction of the pressure container 7; and internal members 5A provided in the pressure container 7 in such a manner that each internal member 5A is interposed between the adjacent separation membrane elements 2 and is located beside each separation membrane element 2.

Disc-shaped caps 8 and 9 are attached to both ends of the pressure container 7. In the cap 8 on one side (left side in FIG. 1), a feed tube 81 for feeding a raw liquid into the pressure container 7 is provided at a position away from the center of the cap 8. In the cap 9 on the other side (right side in FIG. 1), a first discharge tube 91 for drawing a permeate liquid produced from the filteration of the raw liquid by separation membranes 23 described later is provided at the center of the cap 9, and a second discharge pipe 92 for drawing the concentrated raw liquid is provided at a position away from the center. That is, a flow of the raw liquid from the cap 8 on the one side to the cap 9 on the other side is formed in the pressure container 7. The feed tube 81 and the second discharge tube 92 may be provided in the pressure container 7.

In the present embodiment, reverse osmosis membrane elements are used as the separation membrane elements 2. However, the separation membrane elements 2 may be, for example, ultrafiltration membrane elements.

Each separation membrane element 2 has a central tube 21 functioning as a water collecting tube, a layered body 22 wound around the central tube 21, a pair of end members 3 fixed to both end portions of the central tube 21 so as to sandwich the layered body 22; and an outer covering material 28 enclosing the layered body 22. The pair of end members 3 also serves to prevent the layered body 22 from extending telescopically.

In the present embodiment, a sealing member 41 is attached to an upstream-side end member 3 of the pair of the end members 3, and the sealing member 41 is a packing having an approximately U-shaped cross-section and configured to seal the gap between the separation membrane element 2 and the inner peripheral surface of the pressure container 7. The packing is designed to utilize a pressure applied by the raw liquid from the upstream side. However, the sealing member 41 is not limited to the packing having an approximately U-shaped cross-section, and may have any shape as long as the sealing member 41 can seal the gap between the separation membrane element 2 and the inner peripheral surface of the pressure container 7.

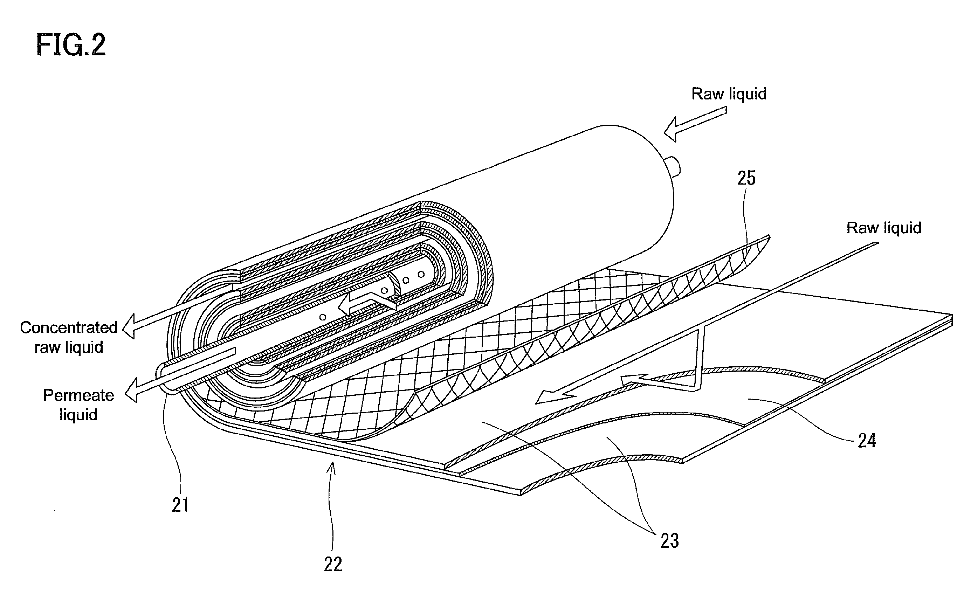

The central tube 21 is provided with a plurality of introduction holes for allowing the permeate liquid to flow into the central tube 21 (see FIG. 2). A hollow axial portion 51 of the internal member 5A, which will be described later, extends between and connects the central tubes 21 of the adjacent separation membrane elements 2, and forms a continuous flow path for flowing the permeate liquid. A plug 82 is attached to the central tube 21 of the separation membrane element 2 located at the most upstream position, and the central tube 21 of the separation membrane element 2 located at the most downstream position is connected to the first discharge tube 91 by a coupler 93.

As shown in FIG. 2, the layered body 22 has a shape of a rectangle, and is wound in a direction from one side of the rectangle to the opposite side. The layered body 22 includes: a membrane leaf composed of a permeate-side carrier material 24 and separation membranes 23 placed on both surfaces of the permeate-side carrier material 24; and a feed-side carrier material 25. The membrane leaf has a structure in which the separation membranes 23 are joined to each other at their respective three sides so that the membrane leaf has a shape of a sack having an opening at one side. The opening communicates with the introduction holes of the central tube 21. The permeate-side carrier material 24 is, for example, a net made of a resin, and forms a flow path for flowing permeate liquid between the separation membranes joined to each other. The feed-side carrier material 25 is, for example, a net made of a resin and having larger meshes than the permeate-side carrier material 24, and forms a flow path for flowing the raw liquid between wound layers of the membrane leaf.

Examples of the separation membranes 23 include: composite reverse osmosis membranes in which a polyamide-based skin layer is provided on a support of a non-woven fabric and a polysulfone porous membrane; polyvinyl alcohol-based separation membranes excellent in permeability; and sulfonated polyethersulfone-based separation membranes suitable as nanofiltration membranes.

Each of the paired end members 3 is fixed to the central tube 21 in such a manner that the end face thereof is located in the same plane. Specifically, each end member 3 has an inner tubular portion 31 fitted on the outer side of the end portion of the central tube 21, and has an outer tubular portion 32 concentric with the inner tubular portion 31 and surrounding the inner tubular portion 31 at a distance from the inner tubular portion 31.

The inner tubular portion 31 and the outer tubular portion 32 are coupled together, for example, by a plurality of ribs arranged radially. The spaces among the ribs serve as through openings extending through the end member 3 so as to allow the raw liquid to flow through the end member 3. Thin plates provided with a plurality of through holes may be disposed in the spaces among the ribs.

A groove extending in the peripheral direction may be formed in the outer peripheral surface of the outer tubular portion 32, and the sealing member 41 may be disposed in the groove as appropriate. Furthermore, a stepped portion for holding the outer covering material 28 may be formed in the outer tubular portion 32. In addition, a groove portion for flowing the raw liquid is preferably provided in an end face of the outer tubular portion 32 that contacts a plate portion 53 described later. This groove portion may be provided in a wall surface of the plate portion 53.

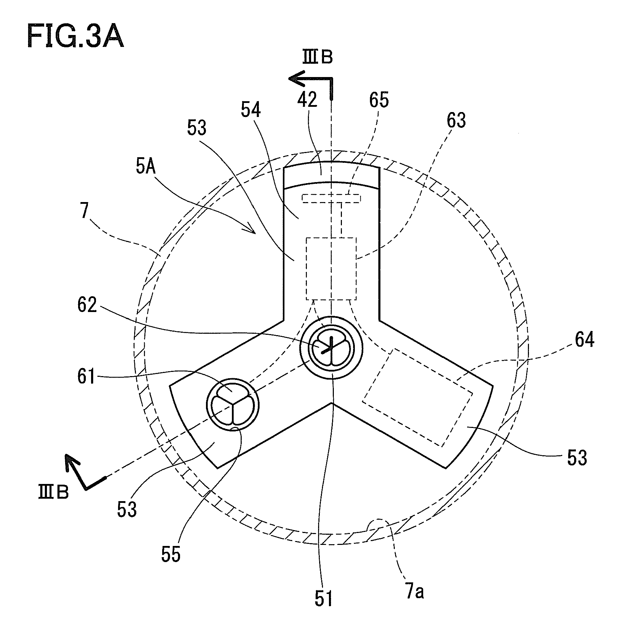

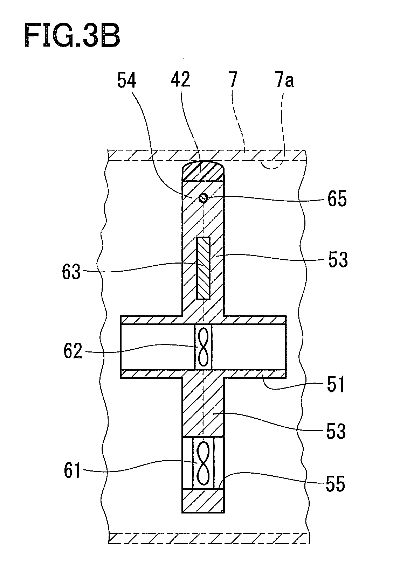

In the present embodiment, the internal member 5A functions as a coupling member for coupling the adjacent separation membrane elements 2 together. Specifically, as shown in FIGS. 3A and 3B, the internal member 5A has an axial portion 51 both end portions of which are respectively fitted in the central tubes 21, and has a plurality of (three in the example shown) plate portions 53 projecting radially outward from a central portion of the axial portion 51. In the present embodiment, the axial portion 51 and the plate portions 53 are integrally formed of a resin. However, the axial portion 51 and the plate portions 53 may be separately molded, and then joined by a bonding agent or by welding.

The method for integrally forming the axial portion 51 and the plate portions 53 is not particularly limited. Examples of the method include injection molding, extrusion molding, insert molding, cast molding, and vacuum cast molding. In addition, examples of the resin that can be used include polystyrene (PS), acrylonitrile butadiene styrene (ABS), polymethylmethacrylate (PMMA), polycarbonate (PC), polyvinyl chloride (PVC), polyamide (PA), polyacetal (POM), polyethylene terephthalate (PET), polybutylene terephthalate (PBT), 2,5-diphenyloxazole (PPO), polysulfone (PSU), polyphenylene sulfide (PPS), p-aminosalicylic acid (PAS), 4-(2-pyridylazo)resorcinol (PAR), polyphenylene ether (PPE), polyethersulfone (PES), polyether ether ketone (PEEK), and polyimide (PI). For cast molding, an epoxy resin or a urethane resin can also be used. In addition, additives such as glass fibers, carbon fibers, and a filler may be added to the resin for strength improvement.

The axial portion 51 has a shape of a tube having a uniform thickness. Although not shown in the drawings, sealing members (e.g., O-rings) for sealing a gap between the outer peripheral surface of the axial portion 51 and the inner peripheral surface of the central tube 21 are attached to both end portions of the axial portion 51. One sealing member or a plurality of sealing members may be attached to each end portion. The central tube 21 need not necessarily have a constant diameter over the entire length thereof. An increased-diameter portion having an increased inner diameter may be provided in the end portion of the central tube 21 so that the end portion of the axial portion 51 may be fitted in the increased-diameter portion.

Each plate portion 53 has a width sufficiently larger than its thickness. Preferably, at least the width of the root portion of the plate portion 53 is larger than the outer diameter of the axial portion 51. In this case, the root portions of the plate portions 53 are continuous with each other, and a seamless ring portion is formed around the axial portion 51. Accordingly, for example, electrical wiring can be installed in the ring portion.

Furthermore, in the present embodiment, one of the plate portions 53 (the plate portion 53 located on the lower left side in FIG. 3A) is equipped with a first flow rate sensor 61, and the axial portion 51 is equipped with a second flow rate sensor 62. The first flow rate sensor 61 is intended to detect the flow rate of the raw liquid sent from the upstream-side separation membrane element 2 into the downstream-side separation membrane element 2, and the second flow rate sensor 62 is intended to detect the flow rate of the permeate liquid sent from the upstream-side separation membrane element 2 into the downstream-side separation membrane element 2.

Specifically, a through hole 55 extending through the plate portion 53 in the axial direction of the axial portion 51 is provided in the plate portion 53, and the first flow rate sensor 61 is disposed inside the through hole 55. On the other hand, the second flow rate sensor 62 is disposed inside the axial portion 51.

In the present embodiment, only one first flow rate sensor 61 is provided. However, a plurality of first flow rate sensors 61 having different sizes are preferably provided. With such a configuration, errors caused by the interindividual variability of flow rate sensors can be compensated.

The projecting end portion of another of the plate portions 53 (the plate portion 53 located on the upper side in FIG. 3A) serves as an antenna holding portion 54 having an antenna 65 embedded in the vicinity of the inner peripheral surface 7a of the pressure container 7. Here, the "projecting end portion" means a peripheral region corresponding to about 1/3 of the entire length of the plate portion 53 from the projecting end surface of the plate portion 53.

The antenna 65 is intended to transmit detected signals generated by the first flow rate sensor 61 and the second flow rate sensor 62. The antenna 65 extends in the width direction of the plate portion 53 in which the antenna 65 is enclosed. The length of the antenna 65 depends on the frequency of the radio wave used for wireless communication.

Furthermore, in the present embodiment, a circuit board 63 connected to the first flow rate sensor 61, the second flow rate sensor 62, and the antenna 65, is also enclosed in the plate portion 53 in which the antenna 65 is enclosed. For example, a wireless communication circuit for wireless communication using the antenna 65, and a power control circuit for controlling power supply from a power-supply device 64 described later to the first flow rate sensor 61 and the second flow rate sensor 62, are formed on the circuit board 63A. The circuit board 63 may extend up to the region immediately below the antenna 65 so that the antenna 65 is mounted directly on the circuit board 63. Alternatively, the circuit board 63 may be located radially inward of the antenna 65, and connected to the antenna 65 via a power line.

The power-supply device 64 for supplying power to the first flow rate sensor 61 and the second flow rate sensor 62 via the circuit board 63 is enclosed in the remaining plate portion 53 (the plate portion 53 located on the lower right side in FIG. 3A). A battery or a generator can be used as the power-supply device 64. Alternatively, connection to an AC power supply or wireless power transmission may be used. Especially, use of a battery is preferable.

Examples of the method for enclosing an electric component in each plate portion 53 as described above include a method in which the plate portion 53 is divided into two pieces in the axial direction of the axial portion 51, the electrical component is mounted on the divided surface of one of the pieces, and then the two pieces are joined together.

Furthermore, a sealing member 42 sealing a gap between the antenna holding portion 54 and the inner peripheral surface 7a of the pressure container 7 is fixed to and covers the projecting end surface of the plate portion 53 in which the antenna 65 is enclosed. It is preferable, but not necessary, that the antenna holding portion 54 be in close contact with the inner peripheral surface 7a of the pressure container 7.

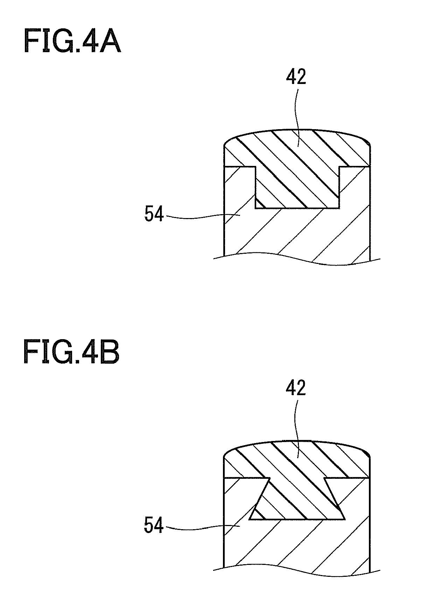

In the present embodiment, the sealing member 42 is adhered to the projecting end surface of the plate portion 53 by an adhesive. However, the method for fixing the sealing member 42 is not particularly limited. For example, as shown in FIGS. 4A and 4B, the sealing member 42 may be fitted in a groove provided in the projecting end surface of the plate portion 53.

The material of which the sealing member 42 is made is not particularly limited as long as problems such as dissolution into the raw liquid do not occur. In order that the sealing member 42 can be elastically deformed and brought into close contact with the inner peripheral surface 7a of the pressure container 7, the material is preferably a rubber resin. Especially, it is particularly preferable to use a silicone rubber which is much less susceptible to deterioration with age and which also slides smoothly on the inner peripheral surface 7a when the separation membrane element 2 is loaded into the pressure container 7.

In the separation membrane module 1 of the present embodiment described above, the antenna 65 is embedded in the antenna holding portion 54, and the gap between the antenna holding portion 54 and the inner peripheral surface 7a of the pressure container 7 is sealed with the sealing member 42. Therefore, a radio wave is transmitted from the antenna 65 to the outside of the pressure container 7 without passing through the raw liquid. This can prevent reduction in received signal strength indication. Consequently, receivers or repeaters can be located at a larger distance from the antenna 65, and the number thereof can also be reduced.

Furthermore, in the present embodiment, the antenna holding portion 54 has the antenna 65 embedded in the vicinity of the inner peripheral surface 7a of the pressure container 7. Therefore, distance attenuation of the radio wave transmitted from the antenna can be reduced, and the necessary amount of the material used for forming the sealing member 42 can also be reduced.

Here, experiments carried out to confirm the effect of the present embodiment will be described. In the experiments, saline solutions were used as the raw liquid, and received signal strength indications were measured in the presence and absence of the sealing member 42. The lower the absolute value of the received signal strength indication is, the more stable the wireless connection between the antenna 65 and a receiver or a repeater placed outside the pressure container 7 is. The width of the gap between the antenna holding portion 54 and the inner peripheral surface 7a of the pressure container 7 was set to 1 mm.

In the case where a saline solution having a salt concentration of 3.5% was used, the received signal strength indication was -81 dBm in the absence of the sealing member 42. By contrast, in the presence of the sealing member 42, the received signal strength indication was -68 dBm, which was about 16% higher than that in the absence of the sealing member 42.

In addition, in the case where a saline solution having a salt concentration of 7.0% was used, the received signal strength indication was -88 dBm in the absence of the sealing member 42. By contrast, in the presence of the sealing member 42, the received signal strength indication was -70 dBm, which was about 20% higher than that in the absence of the sealing member 42.

In the present embodiment, the first flow rate sensor 61 and the second flow rate sensor 62 are used. However, sensors used in the present invention are not limited thereto. Any sensor that is capable of detecting the characteristics of at least one of the raw liquid and the permeate liquid may be used. For example, a sensor used in the present invention may be a pressure sensor, a temperature sensor, a conductivity sensor, or the like.

### (Second embodiment)

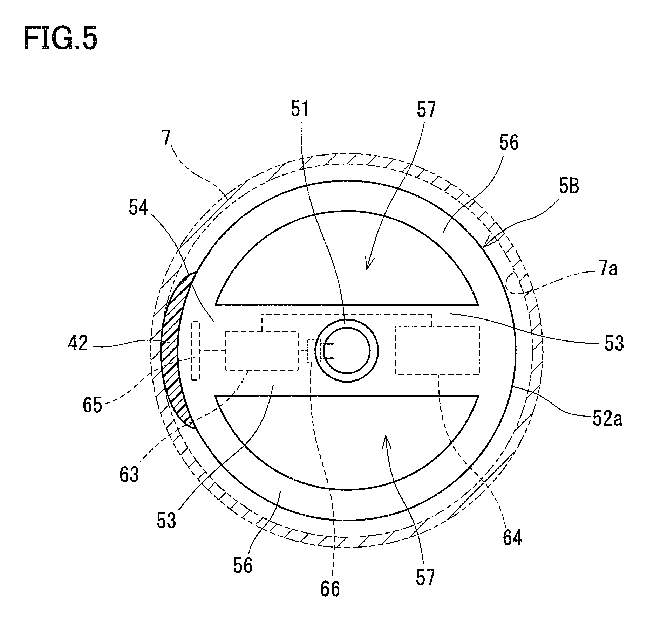

Next, a separation membrane module according to a second embodiment of the present invention will be described. The only difference of the separation membrane module of the present embodiment from the separation membrane module 1 of the first embodiment is that an internal member 5B shown in FIG. 5 is used instead of the internal member 5A. Therefore, only the internal member 5B will be described below. In FIG. 5, the same components as those described in the first embodiment are denoted by the same reference numerals.

The internal member 5B has: an axial portion 51 both end portions of which are respectively fitted in the central tubes 21 (see FIG. 1); two plate portions 53 projecting outward in opposite radial directions from the central portion of the axial portion 51; and an arc-shaped bridge portion 56 forming a bridge between the projecting end portions of the plate portions 53 along the inner peripheral surface 7a of the pressure container 7. The projecting end surfaces of the plate portions 53 and the outer surface of the bridge portion 56 form a cylindrical outer surface of the internal member 5B. In addition, the inner surface of the bridge portion 56 and the side surfaces of the plate portions 53 form openings 57 extending through the internal member 5B in the axial direction of the axial portion 51.

The projecting end portion of one of the plate portions 53 (the plate portion 53 located on the left in FIG. 5) serves as the antenna holding portion 54 having the antenna 65 embedded in the vicinity of the inner peripheral surface 7a of the pressure container 7. In addition, the circuit board 63 is enclosed in the plate portion 53. The power-supply device 64 is enclosed in the other plate portion 53 (the plate portion 53 located on the right in FIG. 5).

In the present embodiment, the internal member 5B is equipped with a conductivity sensor 66 for detecting the electric conductivity of the permeate liquid. The conductivity sensor 66 has a main body enclosed in the internal member 5B and a pair of electrodes projecting from the main body into the axial portion 51. Power is supplied from the power-supply device 64 to the conductivity sensor 66 via the circuit board 63, and a voltage is thus applied between the pair of electrodes.

Furthermore, in the present embodiment, the sealing member 42 sealing the gap between the antenna holding portion 54 and the inner peripheral surface 7a of the pressure container 7 extends in the peripheral direction beyond two sides of the projecting end surface of the plate portion 53 in which the antenna 65 is enclosed, and both end portions of the sealing member 42 are located on the outer surface of the bridge portion 56. The sealing member 42 may be provided only on the projecting end surface of the plate portion 53 as in the first embodiment.

When the bridge portion 56 is provided as in the present embodiment, the sealing member 42 can be extended so that a region in which a radio wave does not pass through the raw liquid is formed also on both sides of the antenna holding portion 54. Therefore, flexibility in arranging a receiver or a repeater can be further improved.

In the present embodiment, since the internal member 5B has a cylindrical outer surface, the sealing member 42 may be provided over the entire periphery of the internal member 5B. In this case, an O-ring can be used as the gap sealing member 42. However, in this case, the process of inserting the internal member 5B into the pressure container 7 is difficult. Therefore, the sealing member 42 is preferably provided on a part of the periphery of the internal member 5B as shown in FIG. 5.

### (Other embodiments)

In the above embodiments, the internal members 5A and 5B function as coupling members. However, when the axial portion 51 is omitted from the internal member 5A or 5B, and a thorough hole fitted to the central tube 21 is provided at the center of the internal member 5A or 5B consisting of the plate portions 53 (and the bridge portion 56), the internal member 5A or 5B can be used as the end member 3 of the separation membrane element 2.

Alternatively, when a configuration as described above is employed, the internal member 5A or 5B can be used as a coupling member fitted on the outer side of the central tube 21 of each of the two adjacent separation membrane elements 2.

The number of the separation membrane elements 2 loaded in the pressure container 7 need not necessarily be two or more. Only one separation membrane element 2 may be loaded. In order for the internal member of the present invention to function as a coupling member coupling the separation membrane elements 2 together, at least a pair of separation membrane elements 2 are provided.

### DESCRIPTION OF THE REFERENCE NUMERALS

- 1: Separation membrane module
- 2: Spiral separation membrane element
- 21: Central tube
- 22: Layered body
- 23: Separation membrane
- 24: Permeate-side carrier material
- 25: Feed-side carrier material
- 42: Sealing member
- 5A, 5B: Internal member (coupling member)
- 51: Axial portion
- 53: Plate portion
- 54: Antenna holding portion
- 56: Bridge portion
- 61: First flow rate sensor
- 62: Second flow rate sensor
- 65: Antenna
- 66: Conductivity sensor
- 7: Pressure container
- 7a: Inner peripheral surface

## Claims

1. A separation membrane module comprising:
a tubular pressure container in which a raw liquid is filtered through a separation membrane to produce a permeate liquid;
a sensor for detecting characteristics of at least one of the raw liquid and the permeate liquid;
an antenna for transmitting a detected signal generated by the sensor;
an internal member provided in the tubular pressure container so as to be adjacent to the separation membrane in an axial direction of the pressure container, the internal member being equipped with the sensor and having an antenna holding portion in which the antenna is embedded; and
a sealing member sealing a gap between the antenna holding portion and an inner peripheral surface of the pressure container.

2. The separation membrane module according to claim 1, wherein the antenna holding portion has the antenna embedded in the vicinity of the inner peripheral surface of the pressure container.

3. The separation membrane module according to claim 1 or 2, wherein the sealing member is made of a rubber resin.

4. The separation membrane module according to any one of claims 1 to 3, further comprising at least one pair of spiral separation membrane elements loaded in the pressure container, each of the elements comprising: a central tube; and a layered body wound around the central tube and comprising the separation membrane and a carrier material, wherein
the internal member functions as a coupling member coupling the pair of separation membrane elements together.

5. The separation membrane module according to claim 4, wherein
the internal member has: a hollow axial portion having two end portions each fitted in the central tube; and a plurality of plate portions projecting radially outward from a central portion of the axial portion, and
the antenna holding portion is arranged in a projecting end portion of one of the plurality of plate portions.

6. The separation membrane module according to claim 5, wherein the internal member further has a bridge portion forming a bridge between the projecting end portions of the plate portions along the inner peripheral surface of the pressure container.

7. The separation membrane module according to any one of claims 1 to 6, wherein the sensor comprises a flow rate sensor for detecting a flow rate of the raw liquid.

8. The separation membrane module according to any one of claims 1 to 7, wherein the sensor comprises a flow rate sensor for detecting a flow rate of the permeate liquid.

9. The separation membrane module according to any one of claims 1 to 8, wherein the sensor comprises a conductivity sensor for detecting an electric conductivity of the permeate liquid.
